Europäisches Patentamt

European Patent Office

Office européen des brevets

(11) Publication number: **0 306 138**
**A2**

## (12) EUROPEAN PATENT APPLICATION

(21) Application number: 88306716.7

(22) Date of filing: **21.07.88**

(51) Int. Cl.⁴: **B29C 67/14** , //B29K105:08

(30) Priority: **07.08.87 US 82882**

(43) Date of publication of application:
**08.03.89 Bulletin 89/10**

(84) Designated Contracting States:
**DE FR GB**

(71) Applicant: MORTON THIOKOL, INC.
110 North Wacker Drive
Chicago Illinois 60606-1560(US)

(72) Inventor: **Spear, Carl D.**
20 North 4th E.
Providence Utah 84332(US)
Inventor: **Butler, Scott W.**
1060 South Main No. 70
Brigham City Utah 84302(US)
Inventor: **Lloyd, Ben A.**
830 East 300 South
Brigham City Utah 84302(US)

(74) Representative: **Bankes, Stephen Charles**
Digby et al
BARON & WARREN 18 South End Kensington
London W8 5BU(GB)

(54) **Ultrasonic delivery system for composite thermoplastic filament winding.**

(57) In a method of and apparatus for winding solid matrix filament composite structures including rocket motor cases, a thermoplastic resin, which is used as a binder for the filaments, is melted and compacted by ultrasonic vibrations during the winding of the filaments to fix the filaments in place at the lay down point thereby resulting in equal tensioning of the filaments throughout the winding so that no subsequent detensioning occurs which could lead to non uniform resin content and non-uniform fiber stress in the winding and lower composite structure strength.

EP 0 306 138 A2

## ULTRASONIC DELIVERY SYSTEM FOR COMPOSITE THERMOPLASTIC FILAMENT WINDING

### BACKGROUND OF THE INVENTION

#### 1. Field of the Invention

This invention relates to an improved method of and apparatus for making solid matrix filament composite structures including rocket motor cases.

#### 2. Description of the Prior Art

Composite thermosetting filament winding is a well developed process for fabricating light weight, high strength, composite structures such as cases for rocket motors. The thermosetting process involves impregnating filaments with a liquid thermosetting polymer resin and winding the roving on a mandrel or core to form the desired article. In a post winding process, the liquid resin is cured, that is, polymerized, to produce a solid matrix filament composite structure.

Thermosetting filament winding is subject to a disadvantage in that the requirement for a post winding cure stage slows the production rate. Additionally, the wound filaments, until after the cure stage, are not fixed in position and are susceptible of being moved out of the predetermined relative positions in which they have been placed during the winding operation. Such movements can result in detensioning of the filaments or in the formation of voids in the wound structure and thus affect both the mechanical and chemical properties of the winding.

Thus, there is a need and a demand for improvement in the methods and apparatus involving filament winding for fabricating lightweight, high strength, composite structures to enable faster production rates while providing improved mechanical and chemical structural properties. The present invention was devised to fill the technological gap that has existed in the art in these respects.

### SUMMARY OF THE INVENTION

An object of the invention is to provide an improved filament winding method and apparatus for the fabrication of low-void lightweight, high strength, solid matrix filament composite structures in which bonding and compaction take place at the roving lay-down point.

Another object of the invention is to provide such an improved method of and apparatus involving melting and compacting by ultrasonic vibrations a thermoplastic resin used as a binder for the fibers or filaments employed in the composite structure.

A further object of the invention is to provide an ultrasonic delivery system for composite thermoplastic filament winding.

. A further object of the invention is to provide a light weight, high strength solid matrix filament casing fabricated from a fiber which may be organic by a process including the steps of:

a. using a thermoplastic resin as a binder for the fiber to form a composite thermoplastic filamentary material,

b. supporting a mandrel having an axis and a surface upon which a casing can be formed by winding the composite filamentary material thereon,

c. rotating the mandrel about said axis,

d. winding a length of said composite thermoplastic filamentary on the rotating mandrel by moving the composite thermoplastic filamentary material from a supply thereof traversely of said mandrel so as to produce a predetermined winding pattern,

e. simultaneously, with the winding of said composite thermoplastic filamentary material on said mandrel, melting and compacting by ultrasonic vibrations said composite thermoplastic filamentary material at the lay-down point thereof on said mandrel, and

f. mechanically removing or washing out the mandrel from the wound composite thermoplastic filamentary material casing.

In accomplishing these and other objectives of the invention in a preferred embodiment thereof, a thermoplastic resin is used as a binder for an organic fiber or filament such as KEVLAR, a high modulus organic fiber that is commercially available from E. I. Dupont de Nemours and Company, Wilmington, Delaware. Other fibers, such as carbon, or inorganic fibers, such as S2 glass, can also be used. The thermoplastic resin/filament composite structure is wound on a suitable mandrel. Usually the mandrel is elongated and has a longitudinal axis about which it may be rotated. Necessarily, the mandrel includes a suitable surface upon which the thermoplastic resin/filament composite structure may be wound to form a desired casing. Ultrasonic vibrational energy is used for a heated delivery system to fuse and compact the thermoplastic resin/filament wound composite structure at the lay-down point of the thermoplastic resin/filament as it is wound on the mandrel.

Thermoplastic resin, as contrasted with thermosetting resin, is a solid at ambient temperatures and requires a heated delivery system to melt and fuse the resin matrix during the winding operation. With the use of ultrasonic vibrational energy in the range of 20,000 to about 40,000 Hz, as disclosed herein, temperatures up to and above 600° F. (315.5° C.) may be developed in the process. A very beneficial part of the process, in addition to melting the thermoplastic resin, is the compaction of the filaments by the ultrasonic vibratory action. Fixing the filament at the point of application thereof during the filament winding operation prevents filament detensioning which leads to non-uniform local resin content, non-uniform fiber stress, and lower pressure vessel strength. The resin solidifies directly behind the horn of the ultrasonic transducer, and the filaments are immediately permanently bonded in place.

This is to be contrasted to thermosetting composite structures wherein the relative positions of the wound filaments are not fixed until after the curing stage and in the interim are susceptible. to shifting in position. As a result, with a thermosetting process, the filaments are not all uniformly or equally tensioned after cure. This leads, as mentioned above, to non-uniform local resin content, non-uniform fiber stress, and lower pressure vessel strength. Also, with thermoplastic winding, no curing process is required for the wound composite structure after it is wound.

Thermoplastic resins that may be used in the practice of the invention include polyethylene, polypropylene, nylon, poly (vinyl) chloride and thermoplastic polyester resins. Other thermoplastic resins which may also be used include cellulose esters, ethylenechlorotrifluorethylene copolymer, poly (vinylidene fluoride) poly (phenylene sulfide), poly ether ether ketone, polyarylene sulfide, poly ether imide, poly sulfone, poly amide imide, and poly ether sulfone as well as other thermo-plastic resins.

In accordance with the invention, an electrically energized frequency modulator provides high frequency electrical energy to an ultrasonic transducer which changes the high frequency electrical energy to mechanical, ultrasonic vibratory energy. The purpose of the horn is to transfer ultrasonic vibrations from the transducer to the roving/composite structure and apply pressure to achieve fusion.

The various features of novelty which characterize the invention are pointed out with particularity in the claims annexed to and forming a part of this application. For a better understanding of the invention, its operating advantages and specific objects attained by its use, reference is made to the accompanying drawings and descriptive matter in which a preferred embodiment of the invention is illustrated.


BRIEF DESCRIPTION OF THE DRAWINGS

With this description of the invention, a detailed description follows with reference being made to the accompanying drawings which form part of the specification, of which:

Fig. 1 is a schematic illustration, in side view aspect, of an ultrasonic delivery system for a single axis winding machine according to the invention;

Fig. 2 is an end view of the system and machine of Fig. 1;

Fig. 3 shows an enlarged view of the horn of the ultrasonic transducer of Figs. 1 and 2;

Fig. 4 is a view of the end of the horn that in Figs. 1 and 2 is disposed in operative relation with the solid matrix filament composite structure being fabricated;

Fig. 5 is an enlarged view of the end of the tip of the horn as seen in Fig. 4;

Fig. 6 is an enlarged view of the side of the tip of the horn as seen in Fig. 3; and

Fig. 7 is a view of the side of the tip of the horn that is seen when the horn is rotated about the longitudinal axis thereof through an angle of 90° from the position shown in Figs. 3 and 6.

## DESCRIPTION OF THE PREFERRED EMBODIMENT

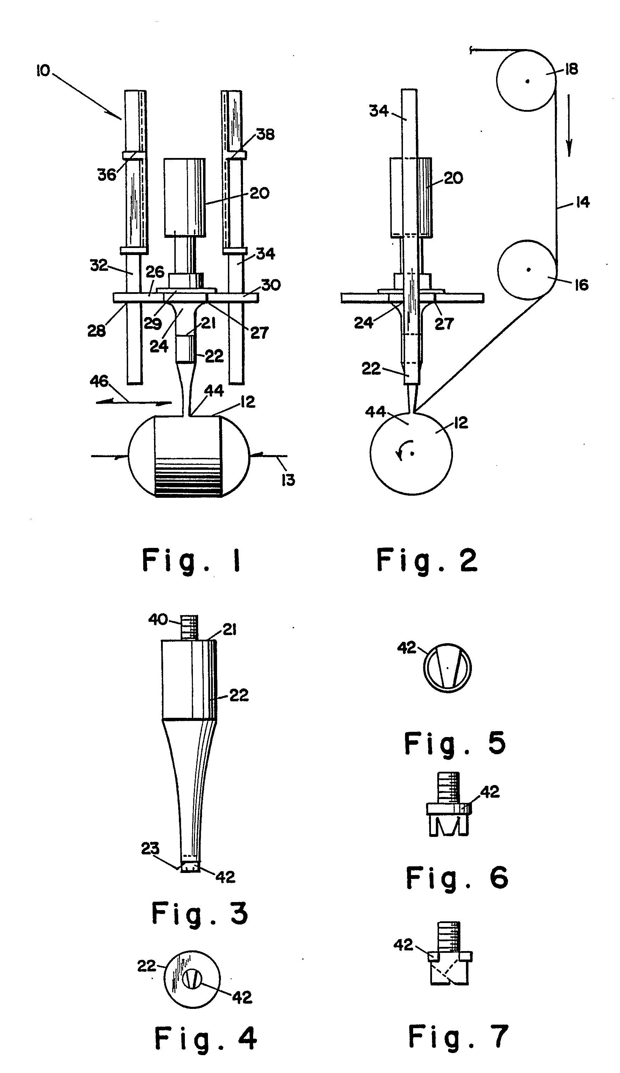

Referring now to the drawings there is illustrated in Figs. 1 and 2 an ultrasonic delivery system 10 for composite thermoplastic filament winding of cases for rocket motors and other structures comprising an elongated core or mandrel 12 upon which is wound a composite thermoplastic filamentary material 14 drawn over a guide roll 16 from a supply roll 18. Mandrel 12 has a longitudinal axis 13 and is supported for rotation in a manner similar to a conventional lathe and is rotated about its horizontal axis 13 by suitable drive means (not shown). Mandrel 12 may be made of a high-temperature resistant, low density material. There are a number of commercially available materials that may be employed for the purpose, one being that sold by Fiber Materials, Inc., Biddeford Industrial Park, Biddeford, Maine 04005 under the trademark "Fiber Form." It is essentially a felt-like material made of carbon fibers coated with a resin. Another commercially available material that also may be employed is high temperature bladder "AFLASS" made by XENOX, INC., Houston, Texas 77079 and supplied by Masites, Inc., Ft. Worth, Texas 76113. Mandrel 12 may also be made of metal.

The ultrasonic delivery system 10 includes an electrical power supply (not shown) that provides electrical energy of commercial voltage and frequency to an ultrasonic power supply (not shown) which converts the commercial voltage and frequency electrical energy to high frequency electrical energy. The ultrasonic power supply, which could contain an adjustable frequency modulator provides electrical energy of high frequency to a converter 20. Converter 20 changes this high frequency electrical energy to mechanical, vibratory energy in the ultrasonic range of 20,000 to 40,000 Hz. Coupled to converter 20 is a booster 24. Booster 24 determines the amplitude of vibration produced at the face of the horn. Attached to the booster 24 at a first end 21, and driven thereby is a horn 22 that is provided to transfer ultrasonic vibrations from the booster 24 to the composite thermoplastic filament 14 as it is wound on mandrel 12 and for applying pressure to the filament 14 to achieve fusion.

A support structure comprising a plate 26 is provided between converter 20 and horn 22, which are urged downwardly by gravity as seen in Figs. 1 and 2, for allowing the horn 22, booster 24, and converter 20 to move upward as the winding on the core 12 increases in diameter. It will be understood that, if desired, the urging downward of converter 20 and horn 22 may be by a mechanically controlled force involving, for example, a feedback load sensor, as known in the control art. Support structure 26 also allows the horn 22, booster 24, and the converter 20 to rise and fall at ultrasonic frequency as the tip of the horn 22 impacts the composite thermoplastic filament 14 and presses the latter against the mandrel 12. To that end plate 26 is positioned in a plane which is parallel to that of the longitudinal axis 13 of mandrel 12. Plate 26, which may be rectangular, has spaced apart holes 28 and 30 through which a respectively associated vertically positioned guide rod 32 and 34 extends. Each of guide rods 32 and 34 is supported by a respectively associated bracket 36 and 38 for vertical adjustment in position. Plate 26 includes a hole 27 that is centrally positioned between holes 28 and 30 for booster 24 to fit through in non-contacting relation. Bonded to booster 24 and to plate 26 is a rubber attachment or clamp 29 that attaches booster 24 to plate 26. By means of attachment 29, plate 26 provides support for converter 20, booster 24 and horn 22 while precluding or minimizing the transfer thereto of ultrasonic vibrations from booster 24.

In order to facilitate the attachment thereof to the booster 24, the horn 22 at its upper or first end 21, as best seen in Fig. 3, may desirably include a screw threaded post 40 that is arranged to be threadedly secured in a tap (not shown) provided in the lower end of booster 24.

At a lower or second end 23 of horn 22, as shown in Fig. 3, there is attached to horn 22 a screw threaded tip 42. Tip 42 is threadedly secured in a tap (not shown) provided in the second end 23 of horn 22. Tip 42 is shaped, as best seen in Figs. 5, 6 and 7, to guide the composite thermoplastic filament 16 into engagement with the surface of the mandrel 12 during the winding process.

In accordance with the invention, the composite thermoplastic filamentary material 14, at the lay-down point 44, as seen in Fig. 1, is repeatedly pressed or compacted at ultrasonic frequency against the surface of the mandrel 12, by the tip 42 of the horn 22 as the result of ultrasonic vibrational energy transferred to tip 42 by horn 22 from booster 24. This melts the thermoplastic resin and compacts the organic fiber of the filamentary material 14. Directly behind the horn 22 the thermoplastic resin solidifies and the fibers of the filamentary material 14 are immediately permanently bonded into the structure of the casing being fabricated..

Brackets 36 and 38 are attached to structure (not shown) for effecting traversal, that is, back and forth or reciprocatory movement of rods 32 and 34 and thereby plate 26, converter 20, booster 24, horn 22 and tip 42 in a path parallel to the longitudinal axis of rotating core 12, as indicated by the double tipped arrow 46 in Fig. 1. In this way there is produced a predetermined winding pattern of the composite thermoplastic filament 14 in a plurality of layers on the surface of the mandrel 12.

Upon completion of the wound composite thermoplastic filament casing on the mandrel 12, the mandrel 12 may be removed from the casing, as by washout or disassembly of the mandrel 12 when it is made of metal.

By way of example and not limitation, it is noted that in one embodiment of the invention, the converter 20 comprised a Model 184P-184V manufactured by Branson Sonic Power Company, Danbury, Connecticut. Materials of which some of the components of the ultrasonic delivery system 10 were fabricated are as follows:

| Component | Material |
|---|---|
| Composite thermoplastic filament 14 | "J" polymer/KEVLAR |
| Horn 22 | Titanium |
| Plate 26 | Aluminum |
| Rods 32, 34 | Steel |
| Tip 42 | Titanium |

Process parameters that have been used to successfully fuse "J" polymer/KEVLAR are:

Vibration Frequency     20,000 Hz
Horn Pressure     800 PSI
Winding Speed     90 inches per minute
Absorbed Energy     250 watts

As those skilled in the art will understand, other combinations of vibrational frequency, horn design and pressure, and energy input can be used to fabricate filament composite thermoplastic structures. The invention is not limited to the parameters given above.

Thus, in accordance with the invention, there has been provided an improved filament winding and apparatus for the fabrication of lightweight, high strength, composite structures. Bonding and compaction takes place at the filament or roving lay-down point. The resin solidifies immediately behind the ultrasonic horn and a composite structure is formed. Ultrasonic melting and compaction provides the means for processing a wide range of thermoplastic/filament materials. The melting/solidification sequence with compaction eliminates debulking and polymerizing steps used in processing thermosetting composites. This results in faster production rates. Additionally, in general, thermoplastic composites have improved mechanical and chemical properties.

With this description of the invention in detail, those skilled in the art will appreciate that modifications may be made to the invention without departing from its spirit. Therefore, it is not intended that the scope of the invention be limited to the specific embodiments illustrated and described. Rather, it is intended that the scope of this invention be determined by the appended claims and equivalents thereof.

## Claims

1. The method of making a casing by winding a fiber comprising the steps of:
   a. using a thermoplastic resin as a binder for the fiber to form a composite thermoplastic filamentary material,
   b. supporting a mandrel having an axis and a surface upon which a casing can be formed by winding the composite filamentary material thereon,
   c. rotating the mandrel about said axis,
   d. winding a length of said composite thermoplastic filamentary material on the rotating mandrel by moving the composite thermoplastic filamentary material from a supply thereof back and forth relatively to said mandrel so as to produce a predetermined winding pattern, and
   e. simultaneously, with the winding of said composite thermoplastic filamentary material on said mandrel, melting and compacting by ultrasonic vibrations said composite thermoplastic filamentary material at the laydown point thereof on said mandrel.

2. The method as defined by claim 1 wherein said mandrel is elongated and said axis is the longitudinal axis thereof.

3. The method as defined by claim 1 wherein said mandrel is made from a high-temperature resistant material.

5

4. The method as defined by claim 3 including the further step of mechanically removing the mandrel from the wound composite thermoplastic filamentary material casing.

5. ..The method as defined by claim 1 wherein the frequency of the ultrasonic vibrations is in the range from 20,000 Hz to about 40,000 Hz.

6. Apparatus for fabricating a casing by winding composite thermoplastic filamentary material comprising,

a rotatable mandrel having an axis and having a surface upon which a casing can be formed by winding thereon a plurality of layers of the composite thermoplastic filamentary material,

guiding means for guiding the composite thermoplastic filamentary material from a supply thereof into operative winding relationship with the surface of said mandrel, said guiding means and rotatable mandrel being movable relatively to each other thereby to enable a winding of predetermined pattern to be wound on said mandrel, and

means including said guiding means for melting and compacting the composite filamentary material at the lay-down point thereof on said mandrel.

7. Apparatus as defined by claim 6 wherein said means for melting and compacting said composite thermoplastic filamentary material includes means operative to transfer ultrasonic mechanical vibrational energy from a source thereof to said guiding means.

8. Apparatus as defined by claim 7 wherein said means operative to transfer energy from a source of ultrasonic vibrations to said guiding means includes a horn having a first end and a second end, said second end having a tip,

wherein said source of ultrasonic vibrations includes a converter and booster that are operative to change electrical energy to ultrasonic mechanical vibrational energy, and

wherein said first end of said horn is attached to said booster and said tip at said second end of said horn is attached to said guiding means.

9. Apparatus as defined by claim 8 further including support structure for said converter, booster, horn and tip, with said converter, booster, horn, tip and support structure being urged downwardly to cause said tip to press said composite thermoplastic filamentary material into engagement with the surface of said mandrel, and

means to guide vertical movements of said support structure as said converter, booster, horn and tip are moved upward as the winding on the mandrel increases in diameter and as the converter, booster, horn and tip rise and fall due to ultrasonic mechanical vibrations transmitted to said tip by said horn from said converter and booster.

10. Apparatus as defined by claim 9 wherein said support structure includes a plate that is positioned in a plane that is parallel to the axis of rotation of said mandrel, said plate having spaced holes therein, and further including a vertically positioned guide rod in each of said holes for guiding vertical movements of said plate and thereby vertical movements of said converter, booster, horn and tip relatively to the surface of said mandrel.

11. Apparatus as defined by claim 10 further including brackets for supporting each of said guide rods for vertical adjustment in position.

12. A light weight, high strength solid matrix filament casing fabricated from a fiber by a process including the steps of:

a. using a thermoplastic resin as a binder for the fiber to form a composite thermoplastic filamentary material,

b. supporting a mandrel having an axis and a surface upon which a casing can be formed by winding the composite filamentary material thereon,

c. rotating the mandrel about said axis,

d. winding a length of said composite thermoplastic filamentary material on the rotating mandrel by moving the composite thermoplastic filamentary material from a supply thereof back and forth relatively to said mandrel so as to produce a predetermined winding pattern,

e. simultaneously, with the winding of said composite thermoplastic filamentary material on said mandrel, melting and compacting by ultrasonic vibrations said composite thermoplastic filamentary material at the lay-down point thereof on said mandrel, to fix the filamentary material in place at the lay down point thereby to effect substantially equal tensioning of the filamentary material throughout the winding, and

f. mechanically removing the mandrel from the wound composite thermoplastic filamentary material casing.

Fig. 1

Fig. 2

Fig. 3

Fig. 4

Fig. 5

Fig. 6

Fig. 7